# EUROPEAN PATENT SPECIFICATION

(11) **EP 2 439 700 B1**
(45) Date of publication and mention of the grant of the patent: **01.05.2013**
(21) Application number: 10306088.5
(22) Date of filing: 06.10.2010
(51) Int. Cl.: G06T 7/20, G06K 9/00

(54) **Method and Arrangement for Identifying Virtual Visual Information in Images**
Verfahren und Anordnung zur Identifizierung virtueller visueller Information in Bildern
Procédé et agencement pour identifier une information visuelle virtuelle dans des images

(43) Date of publication of application: 11.04.2012
(73) Proprietor: Alcatel Lucent, 75007 Paris (FR)
(72) Inventor: Tytgat, Donny, 9040 Sint-Amandsberg (BE); Lievens, Sammy, 2930, Brasschaat (BE); Aerts, Maarten, 9120, Beveren-Waas (BE)
(74) Representative: ALU Antw Patent Attorneys

(56) References cited:
- US-A1- 2008 192 980
- US-A1- 2009 135 188
- US-A1- 2010 104 195
- KLAUS KOLLREIDER ET AL: "Real-Time Face Detection and Motion Analysis With Application in Liveness Assessment", IEEE TRANSACTIONS ON INFORMATION FORENSICS AND SECURITY, IEEE, PISCATAWAY, NJ, US, vol. 2, no. 3, 1 September 2007 (2007-09-01), pages 548-558, XP011190354, ISSN: 1556-6013, DOI: DOI:10.1109/TIFS.2007.902037

## Description

The present invention relates to a method and arrangement for identifying virtual visual information in at least two images from a sequence of successive images of a visual scene comprising real visual information and said virtual visual information.

When capturing a real-world scene using one or more cameras, it is desirable to only capture the scene objects that are in fact present, and not presented there virtually e.g. by projection. An example may be a future video conferencing system for enabling a video conference between several people, physically located in several distinct meeting rooms. In such a system a virtual environment in which all participants are placed may be represented by projection on a screen or rendered onto one or more of the available visualization devices present in the real meeting rooms. To capture the needed information e.g. which persons are participating, their movements, their expressions, etc, such as to enable the rendering of this virtual environment, cameras are used which are placed in the different meeting rooms. However these camera's not only track the real people and objects in the rooms, but also the people and objects as virtually rendered e.g. on these large screens within these same meeting rooms. While the real people need of course to be tracked to enable a better videoconferencing experience, their projections should not, or should at least be filtered out in a subsequent step.

Published US Patent Application US2008/192980 discloses tracking of object feature points in a video image, and that detected feature points are affine-transformed. It further discloses that it is determined whether the video image is a real object using characteristics of the affine-transformed feature points. Therefore liveness detection resistant to spoofing can be performed without requiring user intervention and additional hardware.

Other possible existing solutions make use of fixed positioned visualization devices cooperating with calibrated cameras which can result in simple rules in order to filter out the unwanted visual information. This can be used for traditional screens, with fixed positions within the meeting rooms.

A problem with this solution is that this only works for relatively static scenes, which composition is known in advance. This solution also requires manual calibration steps, which present a drawback in these situations requiring easy deployability. Another drawback relates to the fact that, irrespective of the content, an area of the captured images, corresponding to the screen area of the projected virtual content, will be filtered out. While this may be appropriate for older types of screen, it may not be appropriate anymore for newer screen technologies such as e.g. translucent screens that only become opaque at certain areas when there is something that needs to be displayed e.g. in the event of display of a cut-out video of a person talking. In this case the area that is allocated as being 'virtual' for a certain camera is not so at all instances in time. Moving cameras are furthermore difficult to support using this solution.

An object of embodiments of the present invention is therefore to.provide a method for identifying the virtual visual information within at least two images of a sequence of successive images of a visual scene comprising real visual information and said virtual visual information, but which does not present the inherent drawbacks of the prior art methods.

According to embodiments of the invention this object is achieved by the method comprising the steps of
- performing feature detection on at least one of said at least two images,
- determining the movement of the detected features between said at least two images, thereby obtaining a set of movements,
- identifying which movements of said set pertain to movements in a substantially vertical plane, said substantial vertical plane being defined relative to a horizontal reference plane, thereby identifying a set of vertical movements
- relating the features pertaining to said vertical movements to said virtual visual information in said at least two images, such as to identify the virtual visual information .

In this way, detection of movements of features in a vertical plane will be used to identify virtual content of the image parts associated with these features. These features can be recognized objects, such as human beings, or a table, or a wall, a screen, a chair, or parts thereof such as mouths, ears, eyes,.... These features can also be corners, or lines, or gradients, or more complex features such as the ones provided by algorithms such as the well-known scale invariant feature transform algorithm.

As the virtual screen information within the meeting rooms will generally contain images of the meeting participants, which usually show some movements, e.g. by speaking, writing, turning their heads etc, and as the position of the screen can be considered as substantially vertical, detection of movements lying in a vertical plane, hereafter denoted as vertical movements, can be a simple way of identifying the virtual visual content on the images as the real movements of the real, thus non-projected people, are generally 3 dimensional movements, thus not lying in a vertical plane. The thus identified virtual visual information can then be further filtered out from the images in a next image or video processing step.

In an embodiment of the method the vertical movements are identified as movements of said set of movements which are related by a homography to movements of a second set of movements pertaining to said features, said second set of movements being obtained from at least two other images from a second sequence of images, and pertaining to the same timing instances as said at least two images of said first sequence of images .

As determining homographies between two sets of movements is a rather straightforward and simple operation, these embodiments allow for an easy detection of movements in a vertical plane. These movements generally correspond to movements projected on vertical screens, which are thus representative for movements of the virtual visual information.

The first set of movements are determined on the first video sequence, while the second set of movements is either determined from a second sequence of images of the same scene, taken by a second camera, or , alternatively from a predetermined sequence only containing the virtual information. This predetermined sequence may e.g. correspond to the sequence to be projected on the screen, and may be provided to the arrangement by means of a separate video or TV channel.

By comparing the movements of the first sequence with these of the second sequence, and identifying which ones are homographically related, it can be deduced that these movements having a homographical relationship with some movements of the second sequence, are therefore movements in a plane, as this is a characteristic of homographical relationships. If it is known from scene information that no other movements in a plane are present e.g. all persons are just moving while yet still being seated around the table, it may be concluded that the detected movements are these which correspond to the movements on the screen, thus corresponding to the movements lying in a vertical plane as no other movements in a plane will be present.

In case however people are also moving around the meeting room, movements may also be detected on the horizontal plane of the floor. For these situations an extra filtering step of filtering out the horizontal movements, or alternatively, an extra selection step of selecting only the movements in a vertical plane from all movements detected in a plane, may be appropriate.

Once the vertical movements are found, the respective image parts pertaining to the corresponding features of these vertical movements may then be identified as the virtual visual information

It is to be remarked that verticality is to be determined relative to a horizontal reference plane, which e.g. may correspond to the floor of the meeting room or to the horizontal reference plane of the first camera. Tolerances on the vertical angle, which is typically 90 degrees with respect to this reference horizontal plane, are typically 10 degrees above and below these 90 degrees.

The present invention relates as well to embodiments of a arrangement for performing the present method embodiments, and to a computer program product incorporating code for performing the present method, to an image analyzer for incorporating such an arrangement.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a high level schematic embodiment of a first variant of the method,
Figs. 2a-b show a more detailed implementations of module 200 of Fig. 1,
Figs. 3-6 show more detailed implementation of other variants of the method

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

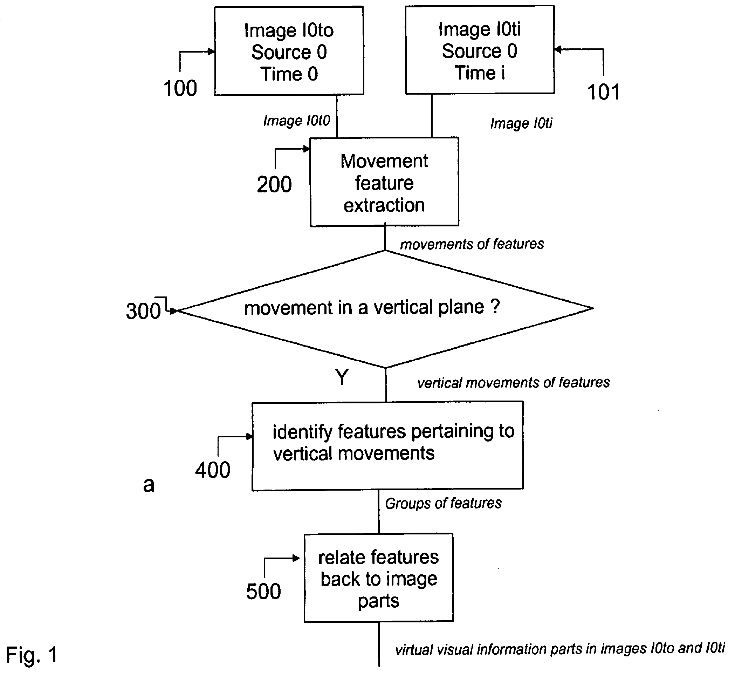

Fig. 1 shows a high level schematic scheme of a first embodiment of the method. On two images 10t0 and 10ti from a sequence of images movement features are extracted. The sequence of images is provided or recorded by one source e.g. a standalone or built in video camera, a webcam,..denoted source 0. The respective images are taken or selected from this sequence, in steps denoted 100 and 101, at two instances in time, these timing instances being denoted t0 and ti. Both instances in time are sufficiently separated from each other in order to detect meaningful movement. This may comprise movement of human beings, but also other movements of e.g. other items in the meeting rooms. Typical values are between 0.1 and 2 seconds.

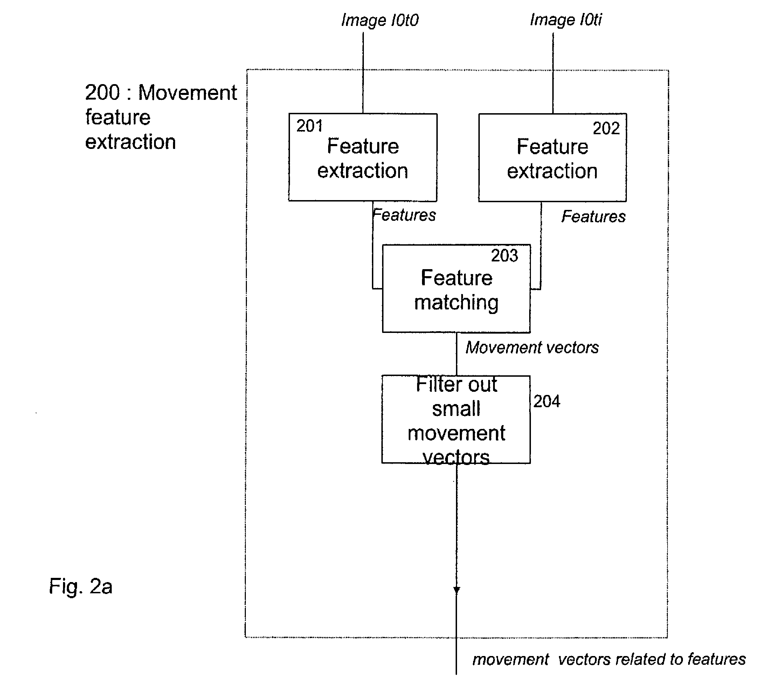

Movement feature extraction takes place in step 200. These movement features can relate to movements of features, such as motion vectors themselves, or can alternatively relate to the aggregate begin and endpoints of these motion vectors pertaining to a single feature, thus more related to the features related to movements themselves. Methods for determining these movements of features are explained with reference to Figs. 2a-b.

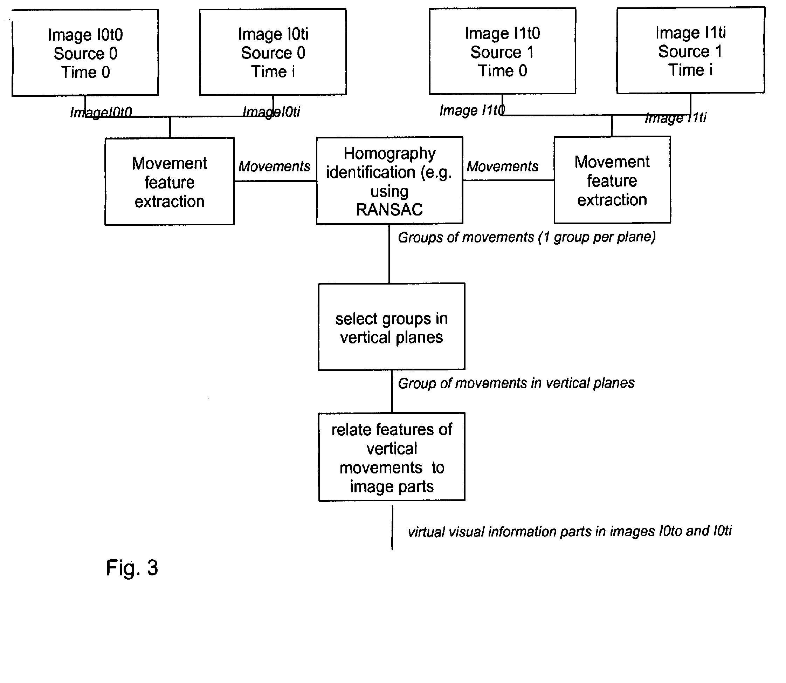

Once these movements of features are determined, it is to be checked in step 300 whether these pertain to vertical movements, in this document thus meaning movements in a vertical plane. A vertical plane is defined as relative to a horizontal reference plane, within certain tolerances. This horizontal reference plane may e.g. correspond to the floor of the meeting room, or to the horizonal reference plane of the camera or source providing the first sequence of images. Typical values for are 80 to 100 with respect to this reference horizontal plane. How this determination of vertical movements is done, will be explained with reference to e.g. Fig. 3. Vertical movements are searched for, as this is related to the fact that the virtual information which is to be identified, usually relates to images of humans or their avatars as projected on a vertical screen. Thus detecting vertical movements will enable to identify the projected images/representations of the people in the room, which will then be identified as virtual information.

Methods for determining whether the movements of features are lying in a vertical plane will be described with reference to Figs 3-4.

Once the movements of features in a vertical plane are determined, these features are to be identified and related back to their respective image parts of the captured images of the source. This is done in steps 400 and 500. These image parts will then accordingly be identified or marked as being virtual information, which can be filtered out, if appropriate.

Figs.2a-b show more detailed embodiment for extracting the movements of features . In a first stage 201 and 202 features are detected and extracted on the two images 10t0 and 10ti. Features can relate to objects, but also to more abstract items such as corners, lines, gradients, or more complex features such as the ones provided by algorithms such as the scale invariant feature transform, abbreviated by Sift, algorithm. Feature extraction can be done using standard methods such as a canny edge corner detector or this previously mentioned Sift method. As both images 10t0 and 10ti are coming from a same sequence provided by a single source recording a same scene, it is possible to detect movements by identifying similar or matching features in both images. It is however also possible (not shown on these figures) to only detect features on one of the images, and then to determine the movement of these features by the traditional way of determining the motion vectors for all pixels belonging to the detected feature of this image, by conventional block matching techniques for determining motion vectors between pixels or macroblocks.

In the embodiments depicted in Figs. 2a-b feature extraction is thus performed on both images and the displacement between matched features then provides the movement or motion vectors between the matched features. This can be a single motion vector per feature, e.g. the displacement of the gravity point of a matching object, or can alternatively be a group of motion vectors, for identifying the displacement of the pixels forming the object. This can also be the case for the alternative method wherein only feature extraction is performed on one image, and the displacement of all pixels forming this feature is calculated. Also in this case one single motion vector can be selected out of this group, for representing the movement vector of the feature.

On Figs. 2a-b feature matching and corresponding determination of the movement of the feature between one image and the other is performed in step 203, thus resulting in one or more motion vectors per matched feature. This result is denoted movement vectors in Figs. 2a-b. In order to only select meaningful movements an optional filtering step 204 can be present. This can be used for e.g. filtering out small movements which can be e.g. attributed to noise. This filtering step usually takes place by eliminating all detected movements which lie below a certain threshold value, this threshold value generally being related to the camera characteristics.

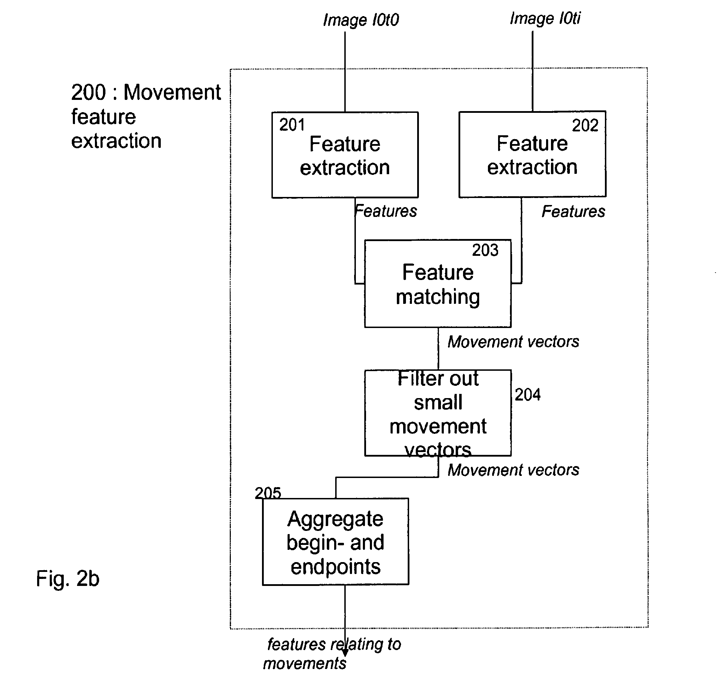

The result of this optional filtering step are motion vectors which can be representative of meaningful movements, thus lying above a certain noise threshold. These movement vectors can be provided as such, as is the case in Fig. 2a, or, in an alternative embodiment as in Fig. 2b, it may be appropriate to aggregate begin and end-points of the motion vectors, per feature.

In a next stage, the thus detected movements of features , or alternatively features related to movements of features, are then to undergo a check for determining whether they pertain to movements in a vertical plane.

Fig. 3 shows a preferred embodiment for determining whether these movements of features are lying in a vertical plane. In the embodiment of Fig. 3 this is done by means of identifying whether homographical relationships exist between the identified movements of features, and a second set of movements of these same features. This second set of movements can be determined in a similar way, from a second sequence of images of the same scene, recorded by a second camera or source. This embodiment is shown in fig. 3, wherein this second source is denoted source 1, and the images selected from that second source are denoted I1t0 and I1ti. Images I0t0 and I1t0 are to be taken at the same instance in time, denoted to. The same holds to images I0ti and I1ti, the timing instance here being denoted ti.

Alternatively this second sequence can be provided externally, e.g. from a composing application, which is adapted to create the virtual sequence for being projected on the vertical screen. This composing application may be provided to the arrangement as the source providing the contents to be displayed on the screen, and thus only contains the virtual information, e.g. a virtual scene of all people meeting together in one large meeting room. From this sequence only containing virtual information again images at instances t0 and ti are to be captured, upon which feature extraction and feature movement determination operations are performed. Both identified sets of movements of features are then submitted to a step of determining whether homographical relationships exist between several movements of both sets. The presence of a homographical relationship is indicative of belonging to a same plane. In this respect several sets of movements, each respective set associated to a respective plane will be obtained. Fig. 3 shows an example of how such homographical relationships can be obtained, namely using the well-known RANSAC, being the abbreviation of Random Sample Consensus, algorithm. However alternative methods such as exhaustive searching can also be used.

The result of this step is thus one or more sets of movements, each set pertaining to a movement in a plane. This may be followed by an optional filtering or selection step of only selecting these sets of movements pertaining to a vertical plane, especially for these situations where also movements in another plane are to be expected. This may for instance be the case for people walking in the room, which will also create movement on the horizontal floor.

In some embodiments the orientation of the plane relative to the camera , which may be supposed to be horizontally positioned, thus representing a reference horizontal plane, can be calculated from the homography by means of homography decomposition methods which are known to a person skilled in the art and are for instance disclosed in http://hal.archives-ouvertes.fr/docs/00/17/47/39/PDF/RR-6303.pdf. These techniques can then be used for selecting the vertical movements from the group of all movements in a plane.

Upon determination of the vertical movements, the features to which they relate are again determined, followed by their mapping onto the respective parts in the images 10tO and 10ti, which image parts are then to be identified as pertaining to virtual information.

In case of an embodiment using a second camera or source recording the same scene, the identified vertical movements may also be related back to features and image parts in images I1t0 and I1ti.

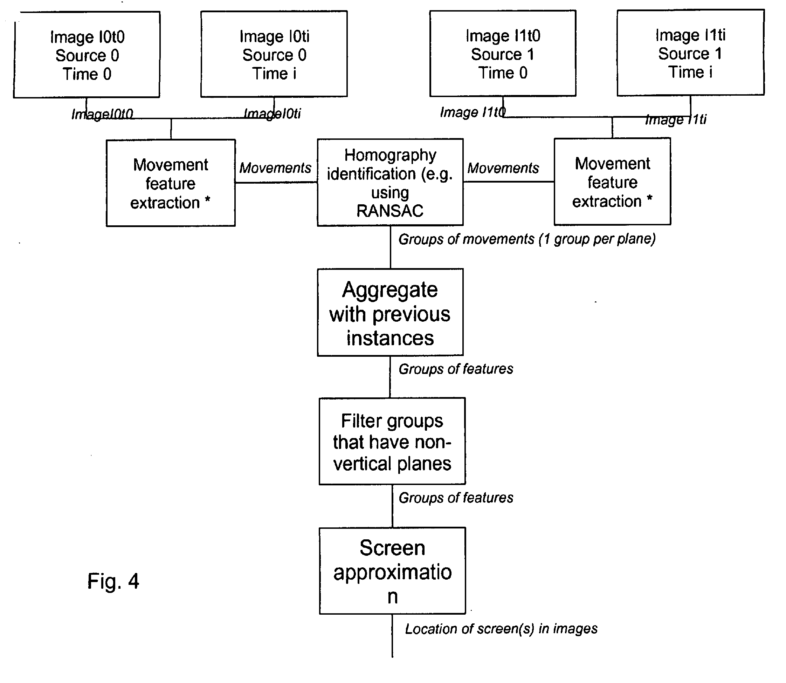

Fig. 4 shows a similar embodiment as Fig. 3, but including an extra step of aggregation with previous instances. This aggregation step uses features determined in previous instances in time, which may be helpful during the determination of the homographies.

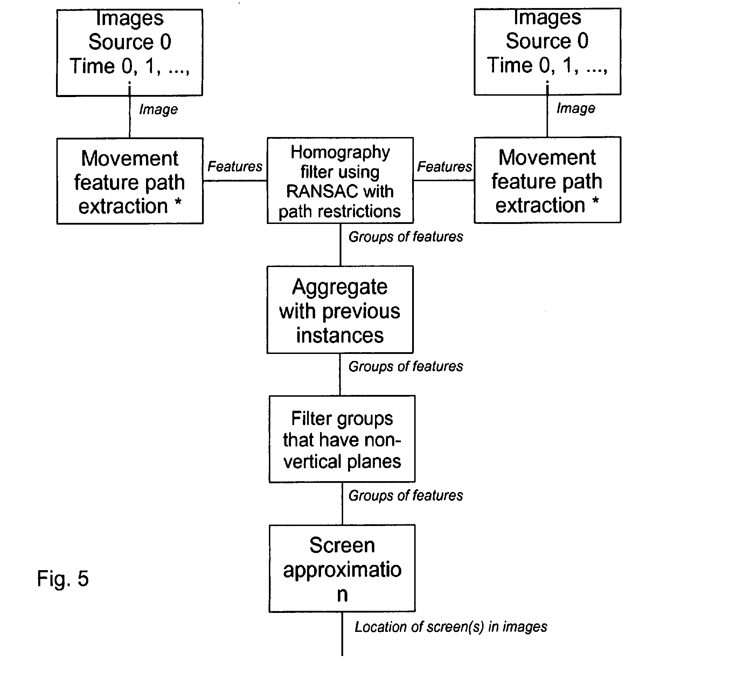

Fig. 5 shows another embodiment, but wherein several instances in time e.g. several frames of a video sequence, of both sources, are tracked for finding matching features. A composite motion vector, being resulting from tracking individual movements of individual features, will then result for both sequences. Homographical relationships will then be searched for the features moving along the composite path. This has the advantage of having the knowledge that features within the same movement path should be in the same homography. This reduces the degrees of freedom of the problem, facilitating an easier resolution of the features that are related by homographies.

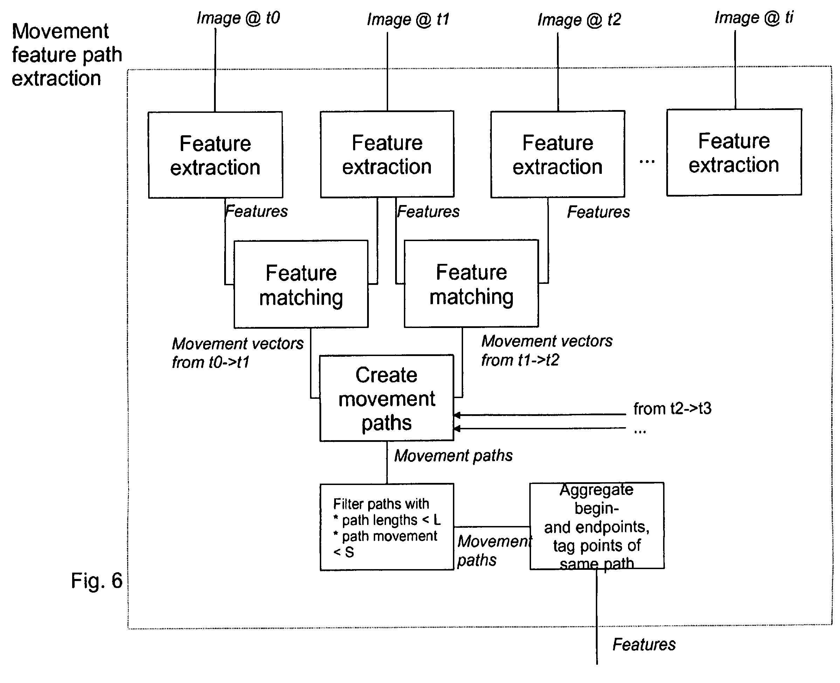

Fig. 6 shows an example of how such composed motion vector can be used, by tracking the features along the movement path. This allows to perform intermediate filtering operations e.g. for movements which are too small.

While the principles of the invention have been described above in connection with specific apparatus, it is to be clearly understood that this description is made only by way of example and not as a limitation on the scope of the invention, as defined in the appended claims.

## Claims

1. Method for identifying virtual visual information in at least two images (I0t0, I0ti) from a first sequence of successive images of a visual scene comprising real visual information and said virtual visual information , said method comprising the steps of
- performing feature detection (201) on at least one of said at least two images,
- determining (200) the movement of the detected features between said at least two images, thereby obtaining a set of movements, **characterized in that** the method further comprises the steps of
- identifying (300) which movements of said set pertain to movements in a substantially vertical plane, said substantial vertical plane being defined relative to a horizontal reference plane, thereby obtaining a set of vertical movements
- relating (400, 500) the features pertaining to said vertical movements to said virtual visual information in said at least two images, such as to identify the virtual visual information.

2. Method according to claim 1, wherein vertical movements are identified as movements of said set of movements which are related by a homography to movements of a second set of movements pertaining to said features, said second set of movements being obtained from at least two other images from a second sequence of images, and pertaining to same timing instances as said at least two images of said first sequence of images .

3. Method according to claim 2 wherein said second sequence of images are provided by a second camera recording said same visual scene .

4. Method according to claim 2 wherein said at least two images of said second sequence of images comprise only said virtual information.

5. Method according to claim 2 further comprising a step of selecting movements related by a homography within a vertical plane

6. Method according to claim 1 wherein further comprising a step of selecting said at least two images from said first sequence on the basis of a separation in time from each other such as to enable movement determination of said features.

7. Method according to claim 1 wherein said substantially vertical plan is having a tilting angle between 80 and 100 degrees with respect to a horizontal reference plane of said scene.

8. Arrangement for identifying virtual visual information in at least two images from a first sequence of successive images of a visual scene comprising real visual information and said virtual visual information , said arrangement being adapted to receive said first sequence of successive images and to
- perform feature detection on at least one of said at least two images,
- determine the movement of the detected features between said at least two images, thereby obtaining a set of movements, **characterized in that** said arrangement is further adapted to
- identify which movements of said set pertain to movements in a substantially vertical plane, said substantial vertical plane being defined relative to a horizontal reference plane, thereby obtaining a set of vertical movements
- relate the features pertaining to said vertical movements to said virtual visual information in said at least two images, such as to identify the virtual visual information .

9. Arrangement according to claim 8, being further adapted to identify vertical movements as movements of said set related by a homography to movements of a second set of movements pertaining to said features, whereby said arrangement is further adapted to obtain said second set of movements from at least two other images from a second sequence provided to said arrangement, and pertaining to same timing instances as said at least two images of said first sequence .

10. Arrangement according to claim 9 being further adapted to receive said second sequence of images from a second camera simultaneously recording said same visual scene as a first camera providing said first sequence of images to said arrangement .

11. Arrangement according to claim 9 wherein said second sequence of images only comprises said virtual information such that said arrangement is adapted to receive said second sequence of images from a video source registered with said arrangement as only providing said virtual information.

12. Arrangement according to claim 9 further being adapted to select movements related by a homography within a vertical plane

13. Arrangement according to claim 8 further being adapted to select said at least two images from said first sequence such that said at least two images are separated in time from each other such as to enable movement determination of said features.

14. Arrangement according to claim 8 wherein said substantially vertical plan is having a tilting angle between 80 and 100 degrees with respect to a horizontal reference plane of said scene.

15. Computer program comprising software adapted to perform any of the steps as set out in any of the previous claims 1-7 when executed on a data-processing apparatus.

## Patentansprüche

1. Verfahren zum Identifizieren von virtuellen visuellen Informationen in mindestens zwei Bildern (10t0, I0ti) aus einer ersten Sequenz von aufeinanderfolgenden Bildern einer visuellen Szene mit realen visuellen Informationen und den besagten virtuellen visuellen Informationen, wobei das besagte Verfahren die folgenden Schritte umfasst:
- Durchführen eines Vorgangs zum Detektieren von Merkmalen (201) auf mindestens einem der besagten mindestens zwei Bilder,
- Ermitteln (200) der Bewegung der detektierten Merkmale zwischen den besagten mindestens zwei Bildern, um einen Satz von Bewegungen zu erhalten,
**dadurch gekennzeichnet, dass** das Verfahren weiterhin die folgenden Schritte umfasst:
- Identifizieren (300), welche Bewegungen des besagten Satzes Bewegungen in einer im Wesentlichen vertikalen Ebene betreffen, wobei die besagte im Wesentlichen vertikale Ebene bezüglich einer horizontalen Referenzebene definiert wird, um einen Satz von vertikalen Bewegungen zu erhalten,
- Inbeziehungsetzen (400, 500) der die besagten vertikalen Bewegungen betreffenden Merkmale zu den besagten virtuellen visuellen Informationen in den besagten mindestens zwei Bildern, um die virtuellen visuellen Informationen zu identifizieren.

2. Verfahren nach Anspruch 1, wobei vertikale Bewegungen als Bewegungen des besagten Satzes von Bewegungen, welche durch eine Homographie zu Bewegungen eines zweiten Satzes von Bewegungen, welche die besagten Merkmale betreffen, in Beziehung stehen, identifiziert werden, wobei der besagte zweite Satz von Bewegungen aus mindestens zwei anderen Bildern einer zweiten Sequenz von Bildern erhalten wird und dieselben Timing-Instanzen wie die besagten mindestens zwei Bilder der besagten ersten Sequenz von Bildern betrifft.

3. Verfahren nach Anspruch 2, wobei die besagte zweite Sequenz von Bildern von einer zweiten Kamera, welche dieselbe visuelle Szene aufzeichnet, bereitgestellt wird.

4. Verfahren nach Anspruch 2, wobei die besagten mindestens zwei Bilder der besagten zweiten Sequenz lediglich die besagten virtuellen Informationen enthalten.

5. Verfahren nach Anspruch 2, weiterhin umfassend einen Schritt des Auswählens von Bewegungen, welche durch eine Homographie innerhalb einer vertikalen Ebene in Beziehung stehen.

6. Verfahren nach Anspruch 1, weiterhin umfassenden einen Schritt des Auswählens der besagten mindestens zwei Bilder aus der besagten ersten Sequenz auf der Basis einer zeitlichen Trennung voneinander, so dass die Ermittlung der Bewegung der besagten Merkmale ermöglicht wird.

7. Verfahren nach Anspruch 1, wobei die besagte im Wesentlichen vertikale Ebene einen Kippwinkel zwischen 80 und 100 Grad in Bezug auf eine horizontale Referenzebene der besagten Szene aufweist.

8. Anordnung zum Identifizieren von virtuellen visuellen Informationen in mindestens zwei Bildern aus einer ersten Sequenz von aufeinanderfolgenden Bildern einer visuellen Szene mit realen visuellen Informationen und den besagten virtuellen visuellen Informationen, wobei die besagte Anordnung ausgelegt ist für den Empfang der besagten ersten Sequenz von aufeinanderfolgenden Bildern und für das
- Durchführen eines Vorgangs zum Detektieren von Merkmalen auf mindestens einem der besagten mindestens zwei Bilder,
- Ermitteln der Bewegung der detektierten Merkmale zwischen den besagten mindestens zwei Bildern, um einen Satz von Bewegungen zu erhalten,
**dadurch gekennzeichnet, dass** die besagte Anordnung weiterhin ausgelegt ist für das
- Identifizieren, welche Bewegungen des besagten Satzes Bewegungen in einer im Wesentlichen vertikalen Ebene betreffen, wobei die besagte im Wesentlichen vertikale Ebene bezüglich einer horizontalen Referenzebene definiert wird, um einen Satz von vertikalen Bewegungen zu erhalten,
- Inbeziehungsetzen der die besagten vertikalen Bewegungen betreffenden Merkmale zu den besagten virtuellen visuellen Informationen in den besagten mindestens zwei Bildern, um die virtuellen visuellen Informationen zu identifizieren.

9. Anordnung nach Anspruch 8, weiterhin ausgelegt für das Identifizieren von vertikalen Bewegungen als Bewegungen des besagten Satzes von Bewegungen, welche durch eine Homographie zu Bewegungen eines zweiten Satzes von Bewegungen, welche die besagten Merkmale betreffen, in Beziehung stehen, wobei der besagte zweite Satz von Bewegungen aus mindestens zwei anderen Bildern einer zweiten Sequenz von Bildern erhalten wird und dieselben Timing-Instanzen wie die besagten mindestens zwei Bilder der besagten ersten Sequenz von Bildern betrifft.

10. Anordnung nach Anspruch 9, weiterhin ausgelegt für den Empfang einer zweiten Sequenz von Bildern von einer zweiten Kamera, welche die besagte selbe visuelle Szene wie eine erste Kamera, welche die besagte erste Sequenz von Bildern an die besagte Anordnung bereitstellt, simultan aufzeichnet.

11. Anordnung nach Anspruch 9, wobei die besagte zweite Sequenz von Bildern lediglich die besagten virtuellen Informationen enthält, so dass die besagte Anordnung für den Empfang der besagten zweiten Sequenz von Bildern von einer Videoquelle, welche bei der besagten Anordnung als lediglich die besagten virtuellen Informationen bereitstellend registriert ist, ausgelegt ist.

12. Anordnung nach Anspruch 9, weiterhin ausgelegt für das Auswählen von durch eine Homographie innerhalb einer vertikalen Ebene in Beziehung stehenden Bewegungen.

13. Anordnung nach Anspruch 8, weiterhin ausgelegt für das Auswählen der besagten mindestens zwei Bilder aus der besagten ersten Sequenz, so dass die besagten mindestens zwei Bilder zeitlich voneinander getrennt sind, um das Ermitteln der Bewegung der besagten Merkmale zu ermöglichen.

14. Anordnung nach Anspruch 8, wobei die besagte im Wesentlichen vertikale Ebene einen Kippwinkel zwischen 80 und 100 Grad in Bezug auf eine horizontale Referenzebene der besagten Szene aufweist.

15. Computerprogramm mit Software, welche dazu vorgesehen ist, bei deren Ausführung auf einer Datenverarbeitungsvorrichtung einen beliebigen der Schritte eines beliebigen der vorstehenden Ansprüche 1-7 durchzuführen.

## Revendications

1. Procédé d'identification d'informations visuelles virtuelles dans au moins deux images (I0t0, IOti) d'une première séquence d'images successives d'une scène visuelle comprenant des informations visuelles réelles et lesdites informations visuelles virtuelles, ledit procédé comprenant les étapes suivantes
- réalisation d'une détection de caractéristique (201) sur au moins l'une desdites au moins deux images,
- détermination (200) du mouvement des caractéristiques détectées entre lesdites au moins deux images, obtenant ainsi un ensemble de mouvements, **caractérisé en ce que** le procédé comprend en outre les étapes suivantes,
- identification (300) des mouvements dudit ensemble qui appartiennent à des mouvements dans un plan sensiblement vertical, ledit plan sensiblement vertical étant défini par rapport à un plan de référence horizontal, obtenant ainsi un ensemble de mouvements verticaux,
- mise en rapport (400, 500) des caractéristiques appartenant auxdits mouvements verticaux avec lesdites informations visuelles virtuelles dans lesdites au moins deux images, de manière à identifier les informations visuelles virtuelles.

2. Procédé selon la revendication 1, selon lequel les mouvements verticaux sont identifiés comme étant des mouvements dudit ensemble de mouvements qui sont mis en rapport par une homographie avec les mouvements d'un deuxième ensemble de mouvements appartenant auxdites caractéristiques, ledit deuxième ensemble de mouvements étant obtenu à partir d'au moins deux autres images d'une deuxième séquence d'images, et appartenant aux mêmes instances chronologiques que lesdites au moins deux images de ladite première séquence d'images.

3. Procédé selon la revendication 2, selon lequel ladite deuxième séquence d'images est délivrée par une deuxième caméra qui enregistre ladite même scène visuelle.

4. Procédé selon la revendication 2, selon lequel lesdites au moins deux images de ladite séquence d'images comprennent seulement lesdites informations virtuelles.

5. Procédé selon la revendication 2, comprenant en outre une étape de sélection des mouvements mis en rapport par une homographie au sein d'un plan vertical.

6. Procédé selon la revendication 1, comprenant en outre une étape de sélection desdites au moins deux images de ladite première séquence en se basant sur une séparation dans le temps l'une de l'autre de manière à permettre la détermination du mouvement desdites caractéristiques.

7. Procédé selon la revendication 1, selon lequel ledit plan sensiblement vertical possède un angle d'inclinaison entre 80 et 100 degrés par rapport à un plan de référence horizontal de ladite scène.

8. Arrangement pour l'identification d'informations visuelles virtuelles dans au moins deux images d'une première séquence d'images successives d'une scène visuelle comprenant des informations visuelles réelles et lesdites informations visuelles virtuelles, ledit arrangement étant adapté pour recevoir ladite première séquence d'images successives et pour
- réaliser une détection de caractéristique sur au moins l'une desdites au moins deux images,
- déterminer le mouvement des caractéristiques détectées entre lesdites au moins deux images, obtenant ainsi un ensemble de mouvements, **caractérisé en ce que** ledit arrangement est en outre adapté pour
- identifier quels mouvements dudit ensemble appartiennent à des mouvements dans un plan sensiblement vertical, ledit plan sensiblement vertical étant défini par rapport à un plan de référence horizontal, obtenant ainsi un ensemble de mouvements verticaux
- mettre en rapport les caractéristiques appartenant auxdits mouvements verticaux avec lesdites informations visuelles virtuelles dans lesdites au moins deux images, de manière à identifier les informations visuelles virtuelles.

9. Arrangement selon la revendication 8, étant en outre adapté pour identifier les mouvements verticaux en tant que mouvements dudit ensemble qui sont mis en rapport par une homographie avec les mouvements d'un deuxième ensemble de mouvements appartenant auxdites caractéristiques, ledit arrangement étant en outre adapté pour obtenir ledit deuxième ensemble de mouvements à partir d'au moins deux autres images d'une deuxième séquence délivrée audit arrangement, et appartenant aux mêmes instances chronologiques que lesdites au moins deux images de ladite première séquence d'images.

10. Arrangement selon la revendication 9, étant en outre adapté pour recevoir ladite deuxième séquence d'images d'une deuxième caméra qui enregistre simultanément ladite même scène visuelle qu'une première caméra qui délivre ladite première séquence d'images audit arrangement.

11. Arrangement selon la revendication 9, avec lequel ladite deuxième séquence d'images comprend seulement lesdites informations virtuelles, de sorte que ledit arrangement est adapté pour recevoir ladite deuxième séquence d'images de la part d'une source vidéo enregistrée avec ledit arrangement comme délivrant uniquement lesdites informations virtuelles.

12. Arrangement selon la revendication 9, étant en outre adapté pour sélectionner des mouvements mis en rapport par une homographie au sein d'un plan vertical.

13. Arrangement selon la revendication 8, étant en outre adapté pour sélectionner au moins deux images de ladite première séquence de sorte que lesdites au moins deux images soient séparées dans le temps l'une de l'autre de manière à permettre la détermination du mouvement desdites caractéristiques.

14. Arrangement selon la revendication 8, avec lequel ledit plan sensiblement vertical possède un angle d'inclinaison entre 80 et 100 degrés par rapport à un plan de référence horizontal de ladite scène.

15. Programme informatique comprenant un logiciel adapté pour exécuter l'une quelconque des étapes définies dans l'une quelconque des revendications 1 à 7 lorsqu'il est exécuté sur un appareil de traitement de données.
